# EUROPEAN PATENT APPLICATION

(11) **EP 1 880 616 A1**
(43) Date of publication of application: **23.01.2008**
(21) Application number: 06117370.4
(22) Date of filing: 18.07.2006
(51) Int. Cl.: A23L 1/0522, A23L 1/035, A23L 1/221, A23L 1/226, A23D 7/005

(54) **Amylase-induced sensory effect of low fat emulsions comprising hydrophobized starch as emulsifier**

(71) Applicant: Stichting Top Institute Food and Nutrition, 6709 PA Wageningen (NL)
(72) Inventor: Van Aken, George Alexander, 6711 BE Ede (NL); Zoet, Franklin Delano, 6987 CM Giesbeek (NL); Minor, Marcel, 6704 AA Wageningen (NL)
(74) Representative: van Westenbrugge, Andries

(57) **Abstract**

The present invention relates to the field of food products. Provided are methods for modulating the sensory attributes, especially the fat and/or thickness related attributes of food composition, using modified starch as emulsifier.

## Description

### FIELD OF THE INVENTION

The present invention relates to the field of food production, in particular to methods of producing food compositions having improved sensory characteristics comprising oil-in-water and fat-in-water emulsions and to the improved food products and oil-in-water and fat-in-water emulsions themselves. The invention also relates to new uses of modified starch for modulating one or more sensory characteristics of food compositions.

### BACKGROUND OF THE INVENTION

Modified starch has been used in the art to stabilize emulsions, especially emulsions of oil or fat in water and emulsions of water in oil or fat. For example, AU 200154296 describes an oil-in-water emulsion comprising a modified starch as stabilizer of the emulsion. Similarly, US 6,077,558 describes an emulsifying system comprising an octenyl succinic anhydride modified starch (OSA starch) and an acetylated monoglyceride as emulsifier, in order to make nutritional products having a desired stability.

It is an object of the present invention to provide a new use for modified starch, especially hydrophobized starch, such as OSA starch. It is a further object to provide a method for modulating, especially for improving, the sensory rating of food compositions.

### GENERAL DEFINITIONS

"Fat" refers to a material that consists predominantly (at least 80% or more) of triglycerides and can be in stable liquid, partially crystalline or completely crystalline form, dependent on the temperature.
"Oil" refers to a fat that is in its liquid form.
"Modified starch" refers herein to starch that compared to the naturally isolated material has been subjected to a treatment that altered the composition and properties of the starch.
"Hydrophobic starch" or "hydrophobically modified starch" or "hydrophobized starch" refers to starch which has been chemically modified to give a hydrophobic character. In other words hydrophobized starch refers to starch that has surface active properties or in yet other words is capable of stabilizing fat-in-water emulsions. Various ways exist to give starch a hydrophobic character, e.g. by incorporating hydrophobic groups into starch. An example is the octenyl succinate ester of starch made by treating starch with octenyl succinic anhydride (OSA). Thus, hydrophobic alk(en)yl groups are incorporated into a normally hydrophilic starch molecule. The hydrophobic groups may comprise hydrocarbon chains of various lengths, such as 8 - 12 carbons. Preparation of hydrophobic starch derivatives can be carried out by procedures known in the art. One such method is disclosed in US 2,661,349, which describes hydrophobic starch derivatives such as starch alkyl or alkenyl succinate (see e.g. Columns 5-9). It describes an aqueous method in which such derivatives are prepared using a standard esterification reaction where the anhydride reagent and starch are suspended in water and mixed under alkaline conditions. Another method for preparing the hydrophobic starch derivatives is disclosed in US 5,672,699 (see e.g. Column 2-4). This patent describes a method for preparing hydrophobic starch derivatives having improved reaction efficiencies wherein the starch and anhydride reagent are pre-dispersed or intimately contacted at low pH before being brought to alkaline reaction conditions. Other disclosures of the starch derivatives and the method of preparation can be found in "Starch: Chemistry and Technology", .sub.2nd edition, edited by R. L. Whistler et al., 1988, pp. 341-343 and "Modified Starches: Properties and Uses", edited by O. Wuirzburg, 1986, Ch. 9, pp. 131-147.

"OSA" refers to n-octenyl succinic anhydride. "OSA starch" is commercially available and can be obtained from various commercial suppliers such as, amongst others, Roquette and National Starch, as Clear gum C0 01 and Purity Gum 2000 or 539-E respectively.
A "low-fat" food product refers to a food product in which the total fat content has been reduced compared to the standard fat containing product, preferably so that the low-fat product contains at least 10%, 20%, 30%, 40% or 50%, 60%, 70%, 80%, 90%, 95% or 99% less fat than the standard product. For example, when referring to a product which normally has about 3 wt% fat content (e.g. custard or cream dessert), a corresponding low-fat product having at least 30% less fat has only 2.1 wt% fat or less. When referring to a product which normally has about 35 wt% fat content (e.g. mayonnaise), a corresponding low-fat product having at least 30% less fat is a product with only 24.5 wt% fat or less (e.g. low-fat mayonnaise), and so forth.

"Emulsified fat" refers herein to fat which has been emulsified using an emulsifier, such as modified starch or whey protein hydrolysate (WPI). Similarly, "fat comprised in the emulsion" refers to the emulsified fat. Also mixtures of fat emulsified using two or more different emulsifiers are encompassed herein. The term "OSA-emulsified fat" is used to refer to emulsified fat which has been emulsified using chemically modified starch, especially hydrophobized starch, such as OSA starch.
"Starch" is used herein to refer to any type of starch, such as starch obtainable from higher plants (natural or genetically modified), such as potato starch, maize/corn starch, pea starch, rice starch, wheat starch, tapioca starch and the like.
"Sensory rating" or "sensory perception" is used herein to refer to a subject's rating of one or more sensory attributes of a food product. An "improved" or "modulated" sensory rating refers to a modulated, preferably an improved rating of one or more sensory attributes, such as for example sensory scores/perception of fat- and/or thickness related attributes.
"Fat and/or thickness related sensory attributes" refer to one or more of the following sensory attributes: creamy, fatty, thick, or mouth filling, mouth feel, coating, after feel, slippery, sticky, satiation and the like (see Example). It is noted that whether or not a sensory attribute is an "improvement" largely depends on a subjective perception and on the type of food product, both of which may vary (e.g. in different cultures). Therefore, the sensory rating is herein referred to as being "modulated" rather than "improved".
"Fat soluble flavours" refers to materials added to a food product to impart an aroma or flavour to the product, and are much better soluble in fat than in water, meaning that when equilibrated between a triglyceride oil such as sunflower oil and water the ratio of the concentration of the flavour in the oil over the concentration of the flavour in the water exceeds a number of 100. Examples are essential oils derived from plants, such as orange oil, lemon oil, peppermint oil, rosemary oil, concentrated from other products, such as butter flavour, by fermentation, such as cheese flavour and yoghurt flavour, or produced synthetically, such as the various esters and aldehydes, ketones etc. These can be included in fat-in-water emulsions according to the invention.
"Trigeminal stimulants" refers to fat-soluble ingredients that induce a burning heat sensation or cooling sensation in the mouth, such as the alkaloid capsaicin, which is responsible for the burning heat sensation obtained from chilli peppers, and menthol, which is responsible for the cooling sensation from mint. These can be included in fat-in-water emulsions according to the invention.
"Salivary α-amylases" (EC 3.2.1.1, α-1,4-glucan-4-glucanohydrolases) refers to salivary enzymes causing hydrolysis of α - D - (1→4) glucan linkages of starch or modified starch in-mouth. "Amylase-induced breakdown" of an emulsion according to the invention, refers to the in-mouth process whereby the salivary amylases destabilize the emulsion by their enzymatic activity, which results in droplet coalescence and an improved sensory rating of the food compositions which comprise the emulsions.

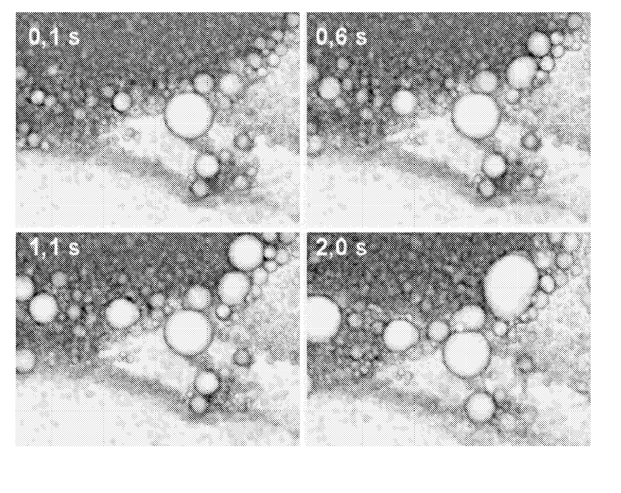

"Amylase-induced coalescence", or "saliva-induced coalescence" or "amylase - / saliva - induced droplet coalescence" refers herein to an amylase-induced breakdown (in the oral cavity) of an emulsifier comprising hydrophobized starch, whereby the emulsion is destabilized, resulting in coalescence of emulsion droplets. Coalescence can be seen and quantified by microscopically analysing the emulsion (or food composition comprising the emulsion) within the first minutes after it has been mixed with an equal volume of fresh human saliva at temperatures between about 20 and 40 degrees Celcius. Instead of saliva also a solution of commercial amylase can be used at such concentration where its starch hydrolysing activity can be microscopically established when brought in contact with a dispersion of natural potato starch that has been partially gelatinized with a heating and cooling treatment so that the starch granules are swollen to several times their initial diameter by still clearly visible. See Example and Figure 1.

### DETAILED DESCRIPTION OF THE INVENTION

It was found that when modified starch, especially hydrophobized starch, is used as emulsifier for fat in water, this resulted in a modulated sensory rating of the food composition comprising or consisting of such emulsions. Especially fat and thickness related sensory attributes were modulated, having been given a significantly higher sensory rating compared to controls (see Example).

Without limiting the invention, the underlying basis for this finding appears to be that the emulsion is destabilized upon contact with saliva in the oral cavity. The activity of amylases appears to at least partially break the emulsifier down (referred to as amylase- or saliva-induced coalescence), leading to droplet coalescence which in turn leads to a modulated sensory rating as the fatty layer is contacted rapidly with the surfaces of the oral cavity.

Thus, in one embodiment the invention provides the use of a modified starch as an emulsifier for the preparation of a food composition comprising fat, for modulating (especially for improving) the sensory rating of said food composition.

Modified starch, in particular chemically modified, especially hydrophobized starch such as OSA starch, is prepared using known methods as referred to above or obtained from commercial suppliers such as Roquette. This starch is used to make a fat-in-water emulsion by known methods, such as high pressure homogenization and others. For example, OSA is first dissolved in water, optionally in the presence of salt and the OSA solution and fat phase are emulsified by homogenization. The sensory rating of the emulsion or of food compositions comprising the emulsion is modulated, compared to suitable control emulsions or control compositions. For example, a low-fat emulsion comprising modified starch as emulsifier (or a food composition comprising or consisting of this emulsion) will have a modulated (preferably an improved) sensory rating compared to the same low-fat emulsion which was prepared using a non-starch emulsifier such as WPI, sodium caseinate, or a mixture of one or more non-starch emulsifiers (or compared to food compositions comprising or consisting of this control emulsion). Thus, a low-fat emulsion will be perceived in-mouth as modulated in one or more sensory attributes, preferably fat and/or thickness related attributes such as creamy and/or fatty mouth feel.

Similarly, a low-fat emulsion comprising modified starch (or a food composition comprising or consisting of this emulsion) will have at least the same sensory rating compared to a "normal-fat emulsion" which was prepared using non-starch emulsifier, such as WPI (or compared to food compositions comprising or consisting of this control "normal fat emulsion"), but which comprises "normal" amounts of emulsified fat. Thus, a low-fat emulsion comprising modified starch will be perceived in-mouth as having at least equivalent fat and/or thickness related sensory attributes, such as creamy and/or fatty mouth feel, as a "normal fat" control which does not comprise or consist of an emulsion made using modified starch and which further differs in the amount of emulsified fat. Depending on the kind of food product an emulsion comprising modified starch (or a food composition comprising or consisting of such an emulsion) may comprise at least 10%, 20%, preferably at least 30%, 40% or 50%, 60%, 70%, 80%, 90%, 95% or 99% less emulsified fat relative to an equivalent emulsion made using a non-starch emulsifier such as WPI, without compromising the sensory rating of the emulsion or food composition.

A modulation of the sensory rating, or an equivalent sensory rating, can be tested by using sensory tests, whereby a test panel of people rates a range of sensory attributes of the food composition or emulsion. Preferably, at least fat and/or thickness related attributes such as creamy and/or fatty mouthfeel of the emulsion and of the food compositions comprising emulsions made using modified starch are changed.

A modulation in sensory rating is understood to be a modulation or improvement in at least one sensory attribute of the food composition. As modulation and improvement are relative terms, it is understood that the modulation / improvement should be repeatable and statistically significant. Generally a statistical confidence level of at least 95%, preferably at least 99% preferably is obtained. This means for example that sensory ratings preferably are carried out by at least eight highly trained subjects and preferably repeated at least twice. In order to determine the sensory rating an attribute of a (modified) food-product or OSA-emulsion, trained subjects are provided with the modified food-product or emulsion (stimulus) and the corresponding controls and rate a range of sensory attributes of the products, in particular fat and/or thickness related attributes using a predetermined scale, as illustrated in the Examples. A skilled person will be able to use standard sensory rating methods to determine whether a starch-based product, which has been modified by inclusion of modified starch, has one or more modulated / improved sensory ratings compared to suitable control compositions (as described above). The same applies for testing whether an OSA-emulsion, or a food composition comprising it, has at least an essentially equivalent sensory rating compared to a suitable control.

In a specific embodiment of the invention the sensory rating of one or more attributes selected from e.g. aroma attributes (e.g. aroma intensity, vanilla aroma), mouthfeel attributes (e.g. thickness, creaminess, fatty mouthfeel), flavor attributes (e.g. vanilla), afterfeel attributes (e.g. creamy afterfeel) and aftertaste attributes (e.g. creamy aftertaste) are modulated by using a modified starch as emulsifier. The rating of the modulated attribute assigned to the test product is statistically significantly different (p<0.05) from the rating of the corresponding attribute of the control product using a statistical repeated-measures design. The same applies for testing whether an emulsion, or a food composition comprising it, has at least an equivalent sensory rating compared to a suitable control.

The modified starch may be used as an emulsifier for improving the sensory rating of any type of food composition (solid, liquid or semi-solid), such as deserts (yoghurts, custard, dressings, etc.), milk, soups or drinks. Thus, when referring to "food compositions" it is understood that this encompasses liquid compositions comprising or consisting of emulsions according to the invention.

In another embodiment, the food composition further comprises at least one fat soluble flavour and/or at least one trigeminal stimulant. Such flavours and/or stimulants are suitably added to the fat component used for preparing the emulsion, so that they are entrapped in the fat droplets. Alternatively, the flavour and/or trigeminal stimulant may already comprise or consist of lipid (for example citric flavour oil and orange flavour oil, or a fat solution comprising one or more trigeminal stimulants), in which case it may be used as such in the preparation of the OSA-emulsion. The fast in-mouth droplet coalescence results in the release of the fat-soluble flavour and/or stimulant into the mouth cavity, providing an improved perception of the flavour and/or stimulant. Which amount of the flavour and/or stimulant is suitable depends on the type of food product to be made. Suitable fat-soluble flavours are essential oils derived from plants, such as orange oil, lemon oil, peppermint oil, rosemary oil, concentrated from other products, such as butter flavour, by fermentation, such as cheese flavour and yoghurt flavour, or produced synthetically, such as the various esters and aldehydes, ketones etc.

In this embodiment, the sensory attributes which are modulated are (preferably in addition to one or more other sensory attributes) taste and/or aroma of the emulsion and food compositions comprising or consisting of the emulsion.

The food composition, made using modified starch as an emulsifier, and using triglyceride fats comprises between 0.5 and 80 wt% OSA-emulsified fat, preferably between 0.5 and 60 wt%, between 0.5 and 50 wt%, between 0.5 and 40 wt%, between 0.5 and 30 wt%, between 0.5 and 20 wt%, and most preferably between 0.5 and 10 wt%, between 0.5 and 5 wt%, between 0.5 and 2 wt%, or less. Preferred fat sources are vegetable oils, such as olive oil, sunflower oil, canola oil and animal fat or milk fat, or modified fats, or mixtures of any of these. The fats can be modified for example by transesterification, fractionation or hardening.

For food compositions, made using modified starch as an emulsifier, and using a flavour oil and/or a solution comprising or consisting of at least one trigeminal stimulus in a triglyceride fat, the minimal amounts of the OSA-emulsified flavour oil required, and/or the OSA-emulsified triglyceride fat containing the trigeminal stimulus required, depends on the concentration of the flavouring compounds and/or trigeminal stimulant(s) in the fat and on the intensity of the flavour and/or trigeminal stimulus desired in the food product. The concentration of these flavours and/or trigeminal stimulating fat may be similar to that that of triglyceride fats, but can be lowered to a concentration needed to obtain the desired flavour and/or trigeminal effect for the specific application, and may then be as low as in the ppm (parts per million) range.

In a preferred embodiment the food composition is a low-fat food composition comprising between 0.1 and 10 wt%, preferably between 0.1 or 0.5 and 10 wt% OSA-emulsified fat, or less, such as 0.1-5%, 0.5-5 wt%, or 0.1-2 wt% or 0.5-2 wt%. The use of modified starch for modulating the sensory attributes of low fat products is especially advantageous, as the in-mouth droplet coalescence results in modulated / increased fat and/or thickness related perception, despite the low level of fat being present.

In one embodiment of the invention the emulsion according to the invention (or the emulsion-comprising food composition) comprises at least 10 % less, preferably at least 20 % less, more preferably at least 30% less (or even less, as described above), emulsified fat relative to a normal-fat emulsion (or food composition comprising it), whereby the normal fat emulsion differs from the emulsion according to the invention only in the relative emulsified fat content and in the absence of hydrophobically modified starch used to keep the fat in emulsified state, and whereby the sensory rating of the emulsion according to the invention is at least identical or essentially similar to that of the normal-fat emulsion.

The modified starch used is preferably hydrophobized starch (being sensitive to amylase induced breakdown), and one particularly preferred hydrophobized starch is n-octenyl succinic anhydride (OSA starch). When used in the preparation of an emulsion, the hydrophobized starch should be capable of leading to rapid droplet coalescence when the emulsion is contacted with amylase *in vitro* (e.g. on a slide / microscopically) and/or *in vivo* (in-mouth). Droplet coalescence can be assessed qualitatively or quantitatively, in relation to a suitable reference emulsion. The emulsions prepared using hydrophobized starch are thus sensitive to salivary-amylase induced breakdown. For example, no saliva-induced coalescence was found with emulsions stabilized with an adsorbed layer of WPI and in the continuous phase WPI or OSA, whereas emulsions stabilized with OSA as adsorbed layer and OSA as continuous phase do show coalescence upon mixing with saliva. Thus, any hydrophobized starch with has this capability is a suitable starch for use herein and for distinguishing emulsions according to the invention from other emulsions. "Rapid droplet coalescence" refers to a droplet coalescence within three minutes, i.e. within 0-180 seconds of contact with the enzyme, preferably within 5, 10, 20 or 30 seconds. Such rapid coalescence will not be seen in the reference emulsions.

Detailed studies revealed that the location of the modified starch in the emulsion is important. Apparently, OSA is effective in saliva-induced coalescence when adsorbed on the droplet interface. It is noted that other materials present in the continuous phase may inhibit this special OSA-functionality. For example, in the special case that the emulsion is stabilized with an adsorbed layer of OSA and contains WPI in the continuous phase, saliva-induced coalescence may to some extent be inhibited.

Methods can be developed for determining the presence of and optionally for quantifying the amount of hydrophobized starch (OSA starch) present at the starch-lipid interface of the droplets (as distinguished from hydrophobized starch within the bulk).

The amount of hydrophobized starch used for making the emulsion depends on the amount of fat used. Preferably, about 0.25g, 0.5g, 0.75g or 1 gram of hydrophobized starch is used per gram of OSA-emulsified fat, Ratios of hydrophobized starch to fat used range thus from 1:4 to 1:1, such as 1:3, 1:2, or ratios in between. For example for 40 wt% fat about 10 wt%, 20 wt%, 25 wt% or 40% modified starch, based on total amount of the product, is used.

Also provided is a fat-in-water emulsion comprising between 0.1 wt% and 80 wt% emulsified triglycertide fat (as described further above), wherein all or at least part of the fat is OSA-emulsified fat made using between 0.25 and 1 gram of hydrophobized starch per gram of fat. This fat-in-water emulsion preferably further comprises at least one or more fat-soluble flavors and/or trigeminal stimulants.

Thus, the fat component of the fat-in-water emulsion may comprise or consist of a flavour oil (as described above) and/or a solution of a trigeminal stimulus in a triglyceride fat (as described above).

In a further embodiment a food composition comprising or consisting of any of the fat-in-water emulsion described herein is provided. Thus, other food grade components may be added to the emulsion (or *vice versa* the emulsion may be added to other food grade components), such as vitamins, water soluble flavours, spices, aromas, colouring agents, proteins or peptides, amino acids, fatty acids, fats (such as non-emulsified fats and/or emulsified fats prepared using non-starch emulsifiers or other emulsifiers, such as WPI), milk or milk components (such as milk proteins or protein hydrolysates), enzymes, probiotics, prebiotics, other food grade bacterial cultures, polysaccharides, oligosaccharides, thickeners, gelling agents, etc.
The food composition is preferably a dessert, a mayonnaise, a sauce, a dressing, a baby-food, a soup, milk, yoghurt or custard, cream, ice-cream, cheese, pudding, cereal bar, candy bar, protein-gel based products, such as Tofu, Valesse, meat-replacers, etc.

In yet another embodiment a method for modulating / improving the sensory rating of a food composition comprising (emulsified) fat is provided, said method comprising including a modified starch, especially hydrophobized starch, as an emulsifier in said food composition. Preferably the method comprises assessing the sensory rating of said food composition.

The method may optionally further comprise the step of comparing the sensory rating of the food composition comprising or consisting of the emulsion (i.e. the "test" composition) to the sensory rating of a control food composition and selecting a food composition having a modulated, especially an improved, sensory rating or, in case of less emulsified fat being present compared to the control food composition, having at least an identical sensory rating compared to the control food composition. Off course, several test food compositions may be compared to several control compositions at the same time or sequentially. For example, test compositions comprising OSA and either 1wt%, 2wt%, 3.5wt%, 5 wt% emulsified fat (or other amounts) may be compared to control compositions comprising WPI and a constant amount of emulsified fat, e.g. 5 wt% emulsified fat. Thus, the test compositions comprise 80% less, 60% less, 30% less and 0% less fat than the control. Following the sensory testing, the test composition which results in at least the same sensory rating than the control composition is identified and selected. This may for example be a test composition comprising 2wt% emulsified fat (i.e. 60% less fat than the control), while having at least the same creamy and/or fatty mouthfeel as the control composition.

Alternatively or in addition to assessments of sensory ratings, one may also assess amylase- or saliva-induced coalescence, because the OSA-emulsions of the invention (and food compositions comprising these) show a different degree and pattern of coalescence compared to control emulsions. Coalescence is preferably assessed visually (with the aid of a microscope), by contacting the emulsion with saliva or an amylase containing solution and observing and optionally quantifying the droplet coalescence. See Examples and Figure 1. It is noted that quantification is difficult, but that the visual observance of the process is sufficient to distinguish between OSA-emulsions and controls, as the differences in speed of droplet coalescence, droplet size and distribution of fused droplets is qualitatively different.

The control food composition or control emulsion is selected from one of the following:
a) the same emulsion as the "test composition" (or a food composition comprising the emulsion), wherein the hydrophobized starch is replaced with an emulsion comprising a non-starch emulsifier, such as WPI, sodium caseinate, low molecular weight surfactants; or a natural emulsion such as milk or milk cream and
b) the same emulsion as the "test composition" (or a food composition comprising the emulsion), wherein the control emulsion comprising more emulsified fat relative to the test composition, preferably at least 10% more emulsified fat and wherein the hydrophobized starch of the test composition is replaced with a non-starch emulsifier such as WPI, sodium caseinate, low molecular weight surfactants.

Preferably in b) one or more control emulsions comprising at least 10%, 20%, 30%, 40%, 50%, 60%, 70%, 80% more emulsified fat relative to the test composition are used.

Encompassed by the present invention are qualifications on packaging of food compositions comprising or consisting of an emulsion comprising modified starch like better taste, improved taste, creamy, more creamy, improved creaminess and the like.

The following non-limiting examples illustrate the invention.

### Figure legends

Figure 1 shows consecutive stages in saliva induced coalescence of an emulsion composed of 40 % sunflower oil in distilled water and stabilized by OSA-starch. The emulsion is brought in contact with a droplet of saliva, after which the saliva mixes into the emulsion by diffusion and convection, leading to a coarsening of the emulsion droplets by coalescence. Indicated are the times after the emulsion has come in contact with saliva.

### EXAMPLES

### Example 1

The perception of OSA-stabilized model emulsions was compared with stable emulsions, stabilized with whey protein isolate (WPI) or WPI with sodium caseinate (WPI/NaCas) and with emulsions sensitive towards shear-induced coalescence

### (reduced amounts of WPI)

### Methods

Stock emulsions containing 40% oil stabilized by WPI (Bipro, Davisco) were diluted to 10% sunflower-oil (Cargill) in 0.01 M NaCl adjusted to pH 6.7. OSA emulsions were prepared by homogenizing 10% sunflower oil in 2.5% octenylsuccinate starch (OSA; Cleargum CO01, Roquette) solution and subsequently bringing the pH towards 6.7 WPI/NaCas emulsions were prepared by addition of a low amount of sodium caseinate (NaCas) to a WPI emulsion and heating for 17 min at 90°C followed by rapid cooling. All emulsions contained 2 wt% sucrose and 0.033 wt% vanilla flavor. The viscosity and droplet sizes of all products was comparable
The emulsions were evaluated by a trained sensory panel (n=8) via semi-monadicaly assessments in triplicate on visual analogue scales. Presentation order was randomly designed over panellists (balanced latin square design).

### Results

Table 1 shows significant differences (in bold) in mouth feel and after feel attributes calculated with ANOVA analysis for repeated measures. OSA emulsions increased perceived mouth feel thick, creamy, fatty, slippery mouth filling and sticky, and after feel sticky, creamy, coating, slimy, and satiating (p<0.05). Moreover dryness, roughness and astringent sensations decreased. The perception of the taste attributes intensity, vanilla, sweet, oil and cream also increased for OSA-emulsions. Differences in odour perception were minor.

**Table 1**

| Attribute | 1% WPI | 0.1% WPI | WPI NaCas | OSA | Attribute description |
|---|---|---|---|---|---|
| *Mouth feel attributes* | | | | | |
| Thick | **33.9** | **31.6** | **34.9** | **64.5** | Thickness of the product |
| Creamy | **41.0** | **37.1** | **40.8** | **75.7** | Velvety; warm; soft |
| Fatty | **41.7** | **32.8** | **37.2** | **74.5** | Oil-like; fatty layer in the mouth |
| Slippery | **52.4** | **48.9** | **50.9** | **70.5** | Slippery feeling |
| Sticky | **27.8** | **27.9** | **26.1** | **36.1** | Sticky, tacky |
| Rough | 29.1 | 32.0 | 32.5 | 25.2 | Rough feeling on the teeth and/or tongue |
| Dry | **29.6** | **31.0** | **34.6** | **22.8** | Dry feeling in the mouth; saliva is absorbed |
| Melting | 12.2 | 12.1 | 13.2 | 17.2 | Dissolves in the oral cavity; structure vanishes |
| Mouthfilling | **41.2** | **37.1** | **37.4** | **75.3** | Feeling that whole the mouth is filled up |

| *After feel attributes* | | | | | |
|---|---|---|---|---|---|
| Astringent | 26.3 | 26.9 | 29.4 | 15.4 | Oil-like; fatty layer in the mouth |
| **Creamy** | **29.8** | **27.8** | **26.9** | **72.0** | Velvety; warm; soft |
| Dry | 43.3 | 45.6 | 46.8 | 26.3 | Saliva absorbing; dry tongue |
| Rough | 41.9 | 39.0 | 43.3 | 27.2 | Rough feeling on the teeth |
| Raw tongue | 29.9 | 32.4 | 32.3 | 19.0 | Raw feeling; sandpaper or cat's tongue |
| Mealy | 18.2 | 16.6 | 17.7 | 14.5 | Fine particles, floury, powdery |
| **Slimy** | **26.0** | **23.8** | **22.8** | **50.2** | Slippery like porridge |
| **Coating** | **40.5** | **38.1** | **35.2** | **70.5** | Fatty coating on tongue, lips or cheek |
| **Sticky** | **28.9** | **28.0** | **29.2** | **43.8** | Syrupy; stickily |
| **Satiation** | **32.5** | **28.8** | **29.6** | **73.7** | Hunger alleviation; filling; satisfactory |
| Tinteling | 14.3 | 16.7 | 17.1 | 11.7 | Pungent; tingling feeling on lips and tongue |

This example shows that the use of modified starch (OSA) as emulsifier results in a significantly modulated sensory perception of several fat and thickness related sensory attributes.

## Claims

1. Use of a modified starch for improving the sensory rating of food compositions, wherein said modified starch is used as an emulsifier of fat and said emulsion is used for the preparation of a food composition.

2. The use according to claim 1, wherein the food composition is a semi-solid food composition.

3. The use according to claim 1, wherein the food composition is a liquid food composition.

4. The use according to claim 1 to 3, wherein the sensory rating is a fat and/or thickness related sensory attribute.

5. The use according to claim 4, wherein the sensory rating is fatty mouthfeel.

6. The use according to claim 4, wherein the sensory rating is creamy mouthfeel.

7. The use according to any one of claims 1-6, wherein the food composition further comprises at least one fat soluble flavour and/or at least one trigeminal stimulant.

8. The use according to claim 7, wherein the sensory rating is aroma and/or taste.

9. The use according to any one of claims 1-8, wherein the food composition comprises between 0.1 and 80 wt%, preferably between 0.5 and 80 wt% emulsified fat.

10. The use according to claim 9, wherein the food composition is a low-fat food composition comprising between 0.1 and 10 wt% or between 0.5 and 10 wt% emulsified fat.

11. The use according to any one of claims 1-10, wherein the food composition comprises at least 30% less fat than a normal-fat food composition, whereby the normal fat composition differs from the food composition only in the emulsified fat content and in the absence of modified starch, and whereby the sensory rating of one or more fat- and/or thickness related sensory attributes of said food composition is at least essentially equivalent or improved compared to that of the normal-fat food composition.

12. The use according to any one of claims 1-10, wherein the sensory rating of said food composition is improved compared to the same composition comprising a control emulsion which does not comprise a modified starch as emulsifier.

13. The use according to any one of claims 1-12, wherein the modified starch is hydrophobized starch, said hydrophobized starch being sensitive to salivary-amylase induced breakdown.

14. The use according to claim 13, wherein the food composition comprises between 1 and 5 wt% hydrophobized starch.

15. The use according to claim 13 or 14, wherein the hydrophobized starch is starch modified by n-octenyl succinic anhydride (OSA).

16. An fat-in-water emulsion comprising between 0.1 and 80 wt% fat, in which all or part of the emulsified fat is made using between 0.25 and 1 grams of hydrophobized starch as emulsifier per gram of fat, and wherein said fat comprises or consists of a fat-soluble flavour and/or a trigeminal stimulant.

17. The fat-in-water emulsion according to claim 16, wherein said fat-soluble flavour is selected from the group consisting of: one or more essential oils derived from plants, such as orange oil, lemon oil, peppermint oil, rosemary oil; one or more flavours concentrated from other products, such as butter flavour; one or more flavours obtained by fermentation, such as cheese flavour and yoghurt flavour; and one or more flavours produced synthetically, such as the various esthers and aldehydes, ketones.

18. The fat-in-water emulsion according to claim 16 or 17, wherein said trigeminal stimulant is an oil soluble stimulant, such as capsaicin and menthol.

19. A food composition comprising the fat-in-water emulsion according to any one of claims 16 to 19.

20. The food composition according to claim 19, said food composition being a dessert, a mayonnaise, a sauce, a dressing, a baby-food, a soup, a cereal bar, a candy bar, a protein-gel based food product or a dairy product, such as milk, yoghurt, custard, cheese, cream, ice-cream or pudding,.

21. A method for modulating the sensory rating of a food composition comprising emulsified fat, said method comprising including a hydrophobized starch as an emulsifier in said food composition.

22. The method according to claim 21 further comprising assessing the sensory rating of said food composition and/or assessing the amylase-induced or saliva-induced droplet coalescence microscopically.

23. The method according to claim 22, further comprising the step of comparing the sensory rating of said food composition (the test composition) to the sensory rating of a control food composition and selecting a test food composition having an improved sensory rating or, in case of relatively less fat being present in the test food composition compared to the control food composition, selecting a test food composition having at least an essentially equivalent sensory rating compared to the control food composition.

24. The method according to claim 23, wherein the control food composition is selected from one of the following:
a) the same food composition as the test composition, wherein the hydrophobized starch is replaced with non-starch emulsifier or with another emulsifier, such as WPI;
b) the same food composition as the test composition, wherein at least 10% more emulsified fat is present relative to the test food composition and wherein the hydrophobized starch is replaced with a food-grade non-starch emulsifier, such as WPI.
